# FASCICULE DE BREVET EUROPEEN

(11) **EP 1 177 033 B1**
(45) Date de publication et mention de la délivrance du brevet: **23.08.2006**
(21) Numéro de dépôt: 00925391.5
(22) Date de dépôt: 04.05.2000
(51) Int. Cl.: B01D 53/94

(54) **COMPOSITION D'EPURATION DES GAZ D'ECHAPPEMENT D'UN MOTEUR A COMBUSTION INTERNE**
ZUSAMMENSETZUNG ZUR ABGASREINIGUNG EINER BRENNKRAFTMASCHINE
COMPOSITION FOR PURIFYING AN INTERNAL COMBUSTION ENGINE EXHAUST GASES

(30) Priorité: 07.05.1999 FR 9905872
(43) Date de publication de la demande: 06.02.2002
(73) Titulaire: Faurecia Systèmes d'Echappement, 92100 Boulogne Billancourt (FR); RHODIA CHIMIE, 92512 Boulogne Billancourt Cedex (FR); Renault s.a.s., 92100 Boulogne Billancourt (FR)
(72) Inventeur: BOULY, Christophe, F-25700 Valentigney (FR); PONTIER, Thierry, F-17000 La Rochelle (FR); SARDA, Christian, F-25230 Dasle (FR); FRITZ, Arno, F-75005 Paris (FR); HEDOUIN, Catherine, F-60270 Gouvieux (FR); SEGUELONG, Thierry, F-92800 Puteaux (FR); MORAL, Najat, F-91240 Saint Michel sur Orge (FR); GUYON, Marc, F-91290 Arpajon (FR); BERT, Christian, F-91360 Epinay sur Orge (FR)
(74) Mandataire: Blot, Philippe Robert Emile
(86) Numéro de dépôt international: PCT/FR2000/001207
(87) Numéro de publication internationale: WO 2000/067882

(56) Documents cités:
- EP-A- 0 613 714
- EP-A- 0 764 460
- FR-A- 2 738 756

## Description

La présente invention concerne les compositions de traitement de gaz d'échappement de moteurs à combustion interne.

Dans les systèmes d'échappement de véhicules automobiles, on utilise des catalyseurs pour convertir le monoxyde de carbone, les hydrocarbures et les oxydes d'azote NOₓ produits au cours du fonctionnement du moteur, en gaz mieux acceptables pour l'environnement. De tels catalyseurs sont décrits dans FR-A-2 738 756.

Lorsque le moteur fonctionne avec un rapport air/combustible stoechiométrique ou légèrement riche, c'est-à-dire entre environ 14,7 et 14,4 des catalyseurs contenant du palladium, du platine et du rhodium ou des mélanges ou alliages de ces métaux sont capables de convertir efficacement les trois familles de gaz simultanément.

De tels catalyseurs sont souvent appelés catalyseurs trois voies.

Pour permettre de réaliser des économies de combustible, il est cependant souhaitable de faire fonctionner les moteurs dans des conditions de combustion pauvre dans lesquelles le rapport air/combustible est supérieur à 14,7 et généralement compris entre 19 et 27.

Les catalyseurs trois voies sont capables de convertir le monoxyde dé carbone et les hydrocarbures mais ne sont pas efficaces pour la réduction des NOₓ produits pendant un fonctionnement à combustion pauvre.

En effet, les catalyseurs à trois voies traditionnels requièrent des proportions très strictes entre les agents oxydants et les agents réducteurs et ne peuvent donc traiter par conversions catalytiques les NOₓ des gaz d'échappement lorsque ces derniers présentent un excès d'oxygène.

Pour résoudre ce problème, on a développé des dispositifs d'épuration des gaz d'échappement comportant des pièges à NOₓ Le principe de ces dispositifs, notamment celui décrit dans le brevet EP-560 991, est d'absorber les NOₓ produits lors du fonctionnement du moteur en mélange pauvre. Un autre dispositif du même type est décrit dans EP-A-0 613 714.

Cette absorption des NOₓ est obtenue en faisant traverser un monolithe imprégné de substances absorptrices par le flux des gaz d'échappement s'échappant des chambres de combustion. Ces substances sont principalement formées d'éléments alcalins ou alcalino-terreux et de catalyseurs d'oxydation. Les oxydes d'azote NOₓ, préalablement oxydés en NO₂ par des catalyseurs appropriés tels que le platine, sont absorbés à la surface des éléments alcalins ou alcalino-terreux par formation de nitrates.

La capacité et la durée de stockage sont forcément limitées, ce qui impose d'effectuer périodiquement des régénérations, couramment appelées purges. Elles ont pour double objectif de libérer les NOₓ ainsi piégés et de réduire les oxydes d'azote en composés non polluants (azote).

Cette étape de purge se déroule grâce à une stratégie moteur adaptée permettant de générer un milieu à faible teneur en oxygène et contenant des quantités importantes d'agents réducteurs (CO, H₂ ou HC). La réduction des NOₓ est alors assurée par l'ajout d'une fonction réductrice, souvent à base de platine ou de rhodium, sur le monolithe.

On sait que certains matériaux alcalins tels que le baryum, le potassium ou le strontium en combinaison avec du platine sont capables d'emmagasiner ou d'absorber des oxydes d'azote dans des conditions d'excès d'oxygène.

Ces pièges à NOₓ sont particulièrement intéressants en raison de leur capacité d'éliminer les NOₓ des gaz d'échappement de moteurs à combustion pauvre.

De tels systèmes d'épuration des gaz d'échappement, s'ils permettent bien d'obtenir des efficacités compatibles avec les niveaux nécessaires pour atteindre les normes législatives, par un fonctionnement adapté des alternances entre les phases d'absorption et les phases dites de régénération, présentent un certain nombre d'inconvénients.

Il est apparu que les pièges à NOₓ actuellement connus présentent un certain nombre d'inconvénients. Ils requièrent des niveaux élevés de métaux précieux puisque ces métaux précieux participent à la fois aux réactions de stockage des NOₓ et à leur réduction. Ils sont donc très chers à fabriquer.

Par ailleurs, les pièges à NOₓ actuels sont très sensibles à un empoisonnement par le soufre (issu du soufre initialement présent dans le carburant). En effet, les oxydes de soufre se substituent du fait de la présence des catalyseurs d'oxydation, par un procédé très similaire à celui responsable de la formation de nitrates, aux oxydes de NOₓ à la surface des éléments alcalins et alcalino-terreux. L'activité de piégeage diminue alors graduellement au cours du temps et il est nécessaire de développer des stratégies de purge du soufre, stratégies fortement consommatrices d'agents réducteurs et en particulier de carburant.

On a donc mis au point des pièges à NOₓ comprenant un support poreux et des catalyseurs comprenant le manganèse et le potassium.

Le support poreux peut être réalisé en alumine, en un oxyde de cérium, en un oxyde de zirconium, ou en zéolite.

On a déjà prévu d'associer un piège à NOₓ du type décrit ci-dessus, un catalyseur trois voies placé dans une ligne d'échappement en amont du piège à NOₓ.

Dans un tel agencement, le catalyseur trois voies étant monté près du moteur, chauffe rapidement et assure une conversion efficace des émissions en démarrage à froid.

Ensuite lorsque le moteur est chaud, le catalyseur trois voies élimine les hydrocarbures, le monoxyde de carbone et les oxydes d'azote des gaz d'échappement pendant le fonctionnement stoechiométrique et les hydrocarbures et le monoxyde de carbone pendant le fonctionnement à combustion pauvre.

Le piège à NOₓ placé en aval du catalyseur trois voies intervient lorsque la température des gaz d'échappement lui permet d'atteindre une efficacité maximale.

On a également envisagé de placer un catalyseur trois voies en aval du piège à NOₓ.

Le fait de placer dans une ligne d'échappement un piège à NOₓ et un catalyseur trois voies en amont et/ou en aval de celui-ci, nécessite pour ces composés des conditionnements à inclure dans une ligne d'échappement de façon séparée, ce qui accroît l'encombrement du système et par conséquent son prix de revient.

L'invention vise à créer une composition de traitement des gaz d'échappement d'un moteur à combustion interne qui tout en étant d'une efficacité accrue par rapport aux compostions connues soit d'un prix de revient réduit en particulier en ce qui concerne son conditionnement en vue de son incorporation dans une ligne d'échappement d'un véhicule automobile.

Elle a donc pour objet une composition d'épuration selon la revendication 1.

La composition peut comprendre l'une ou plusieurs des caractéristiques qui sont l'objet des revendications dépendantes.

L'invention sera mieux comprise à la lecture de la description qui va suivre.

Les moyens absorbant les NOₓ pour moteur à combustion pauvre comprennent une phase active (ou supportée) contenant du manganèse et au moins un élément alcalin et/ou alcalino-terreux et/ou terre rare.

De préférence :
- l'élément alcalin est le sodium ou le potassium,
- l'élément alcalino-terreux est le baryum ou le strontium,
- l'élément terre rare est l'Yttrium ou un lanthanide.

Les éléments précités sont mélangés ou sont sous forme de solutions solides entre au moins deux desdits éléments;

Les proportions desdits éléments sont telles que globalement Mn = 2 à 50% at et de préférence 5 à 30% at de l'ensemble support + phase active.

K et/ou terre rare = 1 à 50% et de préférence 5 à 30% de l'ensemble support + phase active.

Le support contient au moins un des composés suivants :
- l'alumine et/ou des zéolites et/ou des oxydes de cérium et/ou de zirconium.

Le support est sous la forme d'une combinaison ou d'une solution solide d'au moins deux des composés choisis parmi d'alumine, les zéolites et les oxydes de cérium et de zirconium.

Le support présente l'une des compositions suivantes :
a) un mélange ou une solution solide de CeO₂ - ZrO₂ avec Ce/Zr ≥ 1.
b) une solution solide de CeₓZr_{y}M_{z}O₂ avec 1 ≤ x/y ≤ 19 et O ≤ Z ≤ 0,3 et M = Sc, Y ou terre rare.

Ce support est également caractérisé par une porosité importante et par une surface spécifique comprise entre 5 et 300 m²/g.

De façon générale:
1) lorsqu'on dépose la phase active sous forme de dépôts successifs, on procède de manière à déposer en premier lieu un mélange contenant la majorité du Mn, puis un mélange contenant la majorité du K et/ou des alcalino-terreux, des alcalins ou des terres rares;
2) le rapport pondéral phase active/support est inférieur à 1.

La fonction réductrice et/ou de catalyseur trois voies TWC est composée de la manière suivante.

**Métaux précieux** : Groupe VIII du tableau périodique Pt; Pd et Rh avec des teneurs :
Pt : de 0,03 à 4 g/l, préférentiellement entre 0,3 et 1,9 g/l
Pd : de 0,03 à 5,6 g/l, préférentiellement entre 0,3 et 4 g/l
Rh: de 0,03 à 1,2 g/l, préférentiellement entre 0,07 et 0,6 g/l.

La fonction réductrice et/ou de catalyseur trois voies TWC est optimisée par les associations suivantes sur un même catalyseur : Pt/Rh, Pd/Rh et Pt/Pd/Rh.

Les métaux précieux peuvent être déposés sur le monolithe déjà enduit de support ou "washcoat", ensemble ou successivement et de préférence dans certaines couches, s'il s'agit de technologie multicouches.

Dans ce dernier cas, au moins une couche de support ou "washcoat" peut ne supporter aucun des métaux précieux précités, les autres couches pouvant en supporter entre un et trois avec des teneurs et des proportions différentes.

Ils peuvent aussi être déposés préalablement à l'enduction sur au moins une des poudres du support.

Le même support peut être imprégné de plusieurs métaux précieux, soit séparément (par exemple le premier métal est imprégné sur une fraction du support et le deuxième métal, sur la fraction restante du même support), soit ensemble ou successivement sur la même partie du support.

### Supports : Ils sont de deux types :

Parmi les oxydes réfractaires connus de l'homme de l'art pour ce type d'application, on utilise préférentiellement l'alumine : entre 20 et 250 g/l et de préférence entre 50 et 150 g/l.

L'alumine gamma est utilisée de préférence, mais aussi de l'alumine alpha, delta, etha, kappa et theta peuvent aussi être présentes sur le support avec une surface spécifique de 1 à 300 m²/g et de préférence entre 10 et 200 m²/g.

Cette alumine peut être stabilisée thermiquement par ajout d'un ou de plusieurs dopants tels que les oxydes de métaux alcalino-terreux, de préférence Ba et Sr ou les oxydes de terres rares, de préférence le La et Ce.

La teneur totale de ces dopants est comprise entre 1 et 15% en poids de préférence entre 3 et 10%.

### Constituants de stockage d'oxygène.

La teneur de ces constituants est comprise entre 10 et 200 g/l, de préférence entre 20 et 100 g/l d'oxydes Cérium ou de Ce-Zr préformés pouvant être dopés. Ces oxydes peuvent contenir entre 10 et 90% en poids d'oxyde de Ce et de 10 à 90% d'oxyde de Zr et entre 1 et 20% de dopants. Les dopants possibles sont de préférence des oxydes de terres rares, de préférence La, Pr, Nd, ainsi que l'Ytrium. Plusieurs dopants ou promoteurs peuvent se trouver présents dans le même oxyde de Ce-Zr.

Plusieurs oxydes de Ce-Zr de compositions différentes peuvent se retrouver dans une même technologie et dans le cas d'une technologie multicouche, chaque couche peut en contenir plusieurs, de compositions différentes, aussi bien à l'intérieur d'une même couche qu'entre les différentes couches.

D'autre part, au moins une des couches peut ne pas contenir ce type de composé.

### * Eléments fixateurs de H2S :

La fonction réductrice et/ou de catalyseur trois voies contient 0 à 50 g/l maximum, de préférence entre 10 et 30 g/l de tels éléments fixateurs.

Les oxydes préférés pour cette fonction sont les oxydes de Ni, Cu et Mn et peuvent être utilisés seuls ou en association, tels quels ou déposés sur un ou plusieurs supports précités, mais aussi sur l'oxyde de cerium.

Ces composés peuvent être enduits dans une couche spécifique ne comportant pas de métaux précieux.

La fonction de réduction et/ou de catalyseur trois voies TWC, telle que décrites ci-dessus peut être déposée sous la forme d'une monocouche ou sous forme multicouche sur un substrat.

Le produit piège à NOₓ tel que décrit ci-dessus peut être déposé sous la forme d'une monocouche ou sous forme multicouche sur ce même susbtrat ou alors combiné à la fonction réduction et/ou catalyseur trois voies TWC puis déposé.

Une combinaison de type sandwich de ces deux fonctions est également envisageable. Elle peut être réalisée par dépôt de chacune de ces fonctions sur des supports séparés et assemblage desdits supports par superposition.

Les deux fonctions piège à NOₓ et réduction et/ou catalyseur trois voies telles que décrites précédemment sont déposées sur le même substrat à canaux parallèles, préférentiellement un substrat en cordiérite dans les proportions suivantes :
- piège à NOₓ de 25 à 500 g/l préférentiellement entre 100 et 300 g/l,
- réduction et/ou catalyseur trois voies de 25 à 300 g/l préférentiellement de 50 à 150 g/l,
- soit une charge totale de 50 à 800 g/l.

### Exemples :

On va donner ci-après des exemples de réalisation d'une formulation présentant des propriétés de piège à Noₓ et de réduction et/ou de catalyseur trois voies TWC.

### Exemple 1:

La fonction piège à Noₓ est constituée d'une composition K-Mn-CeO2 enduite sur un substrat à canaux parallèles de type cordiérite avec une charge de 50 g/l.

La fonction de catalyseur trois voies TWC est constituée de la manière suivante :
- dépôt de 0,56% de Rh sur un support Ce-Zr présentant une structure solide avec 20% de cérium et 80% de zircone et mélangé : charge 25 g/l.
- dépôt de 0,56% de Pd sur un support Al203 stabilisé par un dopant Ba : charge de 125 g/l.

La formulation présente donc une composition totale de 200 g/l de phase active sur un substrat céramique en cordiérite, décomposée en 50 g/l de fonction piège à NOₓ et 150 g/l de fonction réduction et/ou de catalyseur trois voies TWC.

La formulation ainsi décrite a été enduite sous la forme d'une monocouche sur ledit substrat en cordiérite avec une charge de phase active de 200 g/l.

Le catalyseur ainsi obtenu est vieilli à 875°C durant 6h sous une composition rédox (CO, 02 et H2O).

Les résultats d'évaluation obtenus lors de test catalytiques sont les suivants :

### Tests catalytiques des fonctions de catalyseur trois voies TWC

### Test de température d'amorçage

La composition du gaz sur lequel on a procédé au test de température d'amorçage est donnée dans le tableau I.

**TABLEAU I**

| Composition du gaz testé. | | | |
|---|---|---|---|
| Test réalisé par balayage thermique entre 200 et 450°C | | | |
| COMPOSANT | unité | richesse | |
| | | 0,9800 | 1,0200 |
| CO2 | % | 14 | 14 |
| H2O | % | 10 | 10 |
| CO | % | 0,4 | 1,4 |
| O2 | % | 0,775 | 0,484 |
| C3H6 | ppm | 375 | 375 |
| C3H8 | ppm | 125 | 125 |
| NO | ppm | 950 | 950 |
| N2 | % | 74,68 | 73,97 |

| | | | |
|---|---|---|---|
| VVH= 70 000 h⁻¹ | | | |
| vitesse volumique horaire | | | |

### Résultats des tests de température d'amorçage :

| | | | T° d'amorçage (R=1,02) |
|---|---|---|---|
| | CO | HC | NOₓ |
| KMnCe seul | n(*) | n(*) | n(*) |
| TWC seul | 310°C | 304°C | 331°C |
| Invention | 304°C | 300°C | 324°C |

| | | | |
|---|---|---|---|
| n(*) non mesurable | | | |

### Test de richesse

La composition du gaz sur lequel on a procédé au test de richesse est donnée dans le tableau II.

**TABLEAU II**

| Composition du gaz testé. | | |
|---|---|---|
| Test effectué à une température de 465°C. | | |
| Richesse variant entre 1,04 et 0,97. | | |
| COMPOSANT | unité | teneurs |
| CO2 | % | 14 |
| H2O | % | 10 |
| CO | % | 1,4 |
| O2 | % | 0,085 à 1,46 |
| C3H6 | ppm | 375 |
| C3H8 | ppm | 125 |
| NO | ppm | 950 |
| N2 | % | 74,37 à 72,995 |

| | | |
|---|---|---|
| VVH= 70 000 h⁻¹ | | |
| perturbation fréquence 0,5 Hertz | | |
| amplitude +/-3% | | |

### Résultats

| | % de conversion du point d'isoconversion | | |
|---|---|---|---|
| | CO | HC | NOₓ |
| Piége à NOₓ KMnCe | n(*) | n(*) | n(*) |
| TWC seul | 97,6 | 99,1 | 97,6 |
| Invention | 99,0 | 99,9 | 99,0 |

| | | | |
|---|---|---|---|
| n(*) non mesurable | | | |

### Tests catalytiques des fonctions piège à NOₓ :

conditions expérimentales : .. VVh = 70.000 h⁻¹, 10%H20, 500 ppm NO, 10%O2, 10%C02.

### Résultats

| | NOₓ piégé en mg/litre de catalyseur en 30 sec. | | | |
|---|---|---|---|---|
| | 300°C | 350°C | 400°C | 450°C |
| KMnCe seul | 19 | 35 | 25 | 14 |
| TWC seul | n(*) | 9 | 56 | 60 |
| Invention | 49 | 64 | 88 | 78 |

| | | | | |
|---|---|---|---|---|
| n(*) non mesurable | | | | |

L'activité du TWC seul dans certaines conditions de température s'explique par la présence de Baryum.

La composition de traitement des gaz d'échappement suivant l'invention présente vis à vis des compositions connues, les avantages suivants.

La synergie des divers constituants de la composition permet :
- de meilleures performances de la fonction catalyseur trois voies TWC grâce à l'optimisation des produits pour le stockage de l'oxygène (OSC) contenus dans le piège à NOₓ comme CeO2 de l'exemple ou tout autre produit (Ce-Zr ...) qui élargissent la fenêtre d'activité en balayage (scan) et la conversion au point d'iso-conversion PI.
- de meilleures performances en capacité de stockage de NOₓ en grammes par litre de catalyseur ainsi que l'élargissement de la fenêtre de température par l'utilisation optimale des métaux précieux contenus dans la fonction de catalyseur trois voies TWC qui favorise la transformation de NO en NO₂ de préférence à basse température.

Du fait de l'augmentation des performances, il est possible de réduire de façon significative le volume catalytique ou le nombre de pots catalytiques.

Elle assure un meilleur traitement des NOₓ (réduction) désorbés par le piège à NOₓ du fait de la proximité de la fonction réduction incorporée qui est déposée sur le même substrat.

## Revendications

1. Composition d'épuration des gaz d'échappement d'un moteur à combustion interne pouvant effectuer la combustion d'un combustible avec des rapports air-combustible pauvres, comprenant :
- une première composition comportant au moins un support contenant un oxyde de cérium et au moins une phase active contenant du manganèse ;
- une seconde composition de réduction et/ou de catalyseur trois voies, distincte de la première composition ;
**caractérisée en ce que** la phase active contient en outre au moins un élément alcalin et/ou alcalino-terreux et/ou terre rare adapté pour que la première composition contenant le manganèse et cet élément absorbe les NOₓ présents dans les gaz d'échappement, en présence d'un excès d'oxygène et libère les NOₓ lorsque la concentration en oxygène diminue.

2. Composition suivant la revendication 1, **caractérisée en ce que** la seconde composition de réduction et/ou de catalyseur trois voies est incorporée à la composition absorbant les NOₓ sous une même formulation catalytique.

3. Composition suivant la revendication 1, **caractérisée en ce que** la seconde composition de réduction et/ou de catalyseur trois voies est incorporée à la composition absorbant les NOₓ sous différentes formulations catalytiques déposées sur un même substrat.

4. Composition suivant la revendication 1, **caractérisée en ce que** l'élément alcalin est le sodium ou le potassium.

5. Composition suivant l'une des revendications 1 ou 4, **caractérisée en ce que** l'élément alcalino-terreux est le baryum ou le strontium.

6. Composition suivant l'une des revendications 1, 4 ou 5, **caractérisée en ce que** l'élément terre rare est l'yttrium ou un lanthanide.

7. Composition suivant l'une des revendications 1 ou 4 à 6, **caractérisée en ce que** lesdits éléments entrant dans la composition des moyens absorbant les NOₓ sont sous forme de mélange ou de solutions solides entre au moins deux desdits éléments.

8. Composition suivant l'une des revendications 4 à 7, **caractérisée en ce que** les proportions desdits éléments sont telles que globalement Mn = 2 à 50% at et de préférence 5 à 30% at de l'ensemble support + phase active et K et/ou terre rare = 1 à 50% et de préférence 5 à 30% de l'ensemble support + phase active.

9. Composition suivant l'une des revendications 1 à 8, **caractérisée en ce que** le support contient en outre un des composés suivants :
- l'alumine et/ou des zéolites et/ou des oxydes de zirconium.

10. Composition suivant l'une des revendications 1 à 8, **caractérisée en ce que** le support est sous la forme d'une combinaison ou une solution solide d'au moins un oxyde de cérium et un composé choisi parmi l'alumine, les zéolites et les oxydes de zirconium.

11. Composition suivant l'une des revendications 9 ou 10, **caractérisée en ce que** le support comprend un mélange ou d'une solution solide de CeO₂₋ZrO₂ avec Ce/Zr ≥ 1.

12. Composition suivant l'une des revendications 10 ou 11, **caractérisée en ce que** le support comprend un mélange ou une solution solide de CeₓZr_{y}M_{z}O₂ avec 1 ≤ x /y ≤ 19 et O ≤ Z ≤ 0,3 et M = Sc, Y ou terre rare.

13. Composition suivant l'une des revendications 1 à 12, **caractérisée en ce que** la seconde composition au réduction et/ou de catalyseur trois voies comprend sur un même catalyseur :
- un ou plusieurs métaux précieux Pt, Pd, Rh,
- des supports, oxydes réfractaires de préférence Al₂O₃ dopé ou non par des éléments alcalino-terreux, de préférence Ba, Sr ou des oxydes de terres rares et/ou des oxydes de type CeO₂, ZrO₂ ou Ce-Zr préformés pouvant être dopés préférentiellement par des oxydes de terres rares et/ou d'Yttrium et/ou des oxydes stockeurs d'oxygène préférentiellement ZrO₂, CeO₂ ou des oxydes de Ce-Zr préformés pouvant être dopés préférentiellement par des oxydes de terres rares et/ou d'Yttrium, et/ou des éléments fixateurs de H₂S parmi les éléments ou oxydes de Ni, Mn, Cu.

14. Composition suivant l'une des revendications 1 à 13, **caractérisée en ce que** la seconde composition de réduction et/ou de catalyseur trois voies TWC est déposée sous la forme d'une monocouche ou sous une forme multicouche sur un substrat, tandis que le produit piège à NOₓ est déposé sous la forme d'une monocouche ou sous forme multicouche sur ce même substrat ou bien combiné à la seconde composition de réduction et/ou catalyseur trois voies puis déposé sur ledit substrat.

15. Composition suivant l'une des revendications 1 à 14, **caractérisée en ce que** la seconde composition de réduction et/ou de catalyseur trois voies et le produit piège à NOₓ forment une combinaison de type sandwich par dépôt sur des supports séparés et assemblage desdits supports par superposition.

16. Procédé d'épuration des gaz d'échappement d'un moteur à combustion interne par une composition suivant l'une des revendications précédentes,
**caractérisé en ce qu'**il comprend les étapes suivantes :
- effectuer la combustion d'un combustible en présence d'un excès d'oxygène ;
- absorber les NOₓ présents dans les gaz d'échappement sur la première composition lors de la combustion en présence d'un excès d'oxygène;
puis,
- générer un milieu à faible teneur en oxygène dans les gaz d'échappement ;
- libérer les NOₓ de la première composition dans le milieu à faible teneur en oxygène;
- traiter les NOₓ par la seconde composition de réduction et/ou de catalyseur trois voies dans le milieu à faible teneur en oxygène.

## Claims

1. Composition for purifying the exhaust gases of an internal combustion engine capable of conducting the combustion of a fuel with low air-fuel ratios, comprising:
• a first composition comprising at least one support containing a cerium oxide and at least one active phase containing manganese;
• a second composition - a reduction and/or three-way catalyst composition - distinct from the first composition;
**characterised in that** the active phase additionally includes at least one alkaline and/or alkaline earth and/or rare earth element adapted so that the first composition containing manganese and this element absorbs the NOₓ present in the exhaust gases in the presence of excess oxygen and releases the NOₓ when the oxygen concentration decreases.

2. Composition according to Claim 1, **characterised in that** the second reduction and/or three-way catalyst composition is incorporated into the composition absorbing the NOₓ with the same catalytic formulation.

3. Composition according to Claim 1, **characterised in that** the second reduction and/or three-way catalyst composition is incorporated into the composition absorbing the NOₓ with different catalytic formulations deposited on the same substrate.

4. Composition according to Claim 1, **characterised in that** the alkaline element is sodium or potassium.

5. Composition according to one of Claims 1 or 4, **characterised in that** the alkaline earth element is barium or strontium.

6. Composition according to one of Claims 1, 4 or 5, **characterised in that** the rare earth element is yttrium or a lanthanide.

7. Composition according to one of Claims 1 or 4 to 6, **characterised in that** said elements to be contained in the composition of media absorbing the NOₓ are in the form of a mixture or solid solutions of at least two of said elements.

8. Composition according to one of Claims 4 to 7, **characterised in that** the proportions of said elements are such that overall Mn = 2 to 50% and preferably 5 to 30%, and the combination of support + active phase and K and/or rare earth = 1 to 50%, and preferably 5 to 30% of the combination of support + active phase.

9. Composition according to one of Claims 1 to 8, **characterised in that** the support additionally contains one of the following compounds:
• aluminium and/or zeolites and/or zirconium oxides.

10. Composition according to one of Claims 1 to 8, **characterised in that** the support is in the form of a combination or a solid solution of at least one cerium oxide and a compound selected from among aluminium, zeolites and zirconium oxides.

11. Composition according to one of Claims 9 or 10, **characterised in that** the support comprises a mixture or a solid solution of CeO₂-ZrO₂, where Ce/Zr ≥ 1.

12. Composition according to one of Claims 10 or 11, **characterised in that** the support comprises a mixture or a solid solution of CeₓZr_{y}M_{z}O₂ where 1 ≤ x/y ≤ 19 and O ≤ Z ≤ 0.3 and M = Sc, Y or rare earth.

13. Composition according to one of Claims I to 12, **characterised in that** the second reduction and/or three-way catalyst composition comprises the following on the same catalyst:
• one or more precious metals Pt, Pd, Rh;
• supports, refractory oxides preferably Al₂O₃ doped or not with alkaline earth elements, preferably Ba, Sr, or rare earth oxides and/or oxides such as CeO₂, ZrO₂ or preformed oxides of Ce-Zr capable of being doped preferably with oxides of rare earths and/or yttrium and/or oxygen-storing oxides, preferably CeO₂, ZrO₂ or preformed oxides of Cc-Zr capable of being doped preferably with oxides of rare earths and/or yttrium and/or fixing agents of H₂S from among the elements or oxides ofNi, Mn, Cu.

14. Composition according to one of Claims 1 to 13, **characterised in that** the second reduction and/or three-way catalyst composition, TWC, is deposited in the form of a single layer or in the form of a multiple layer onto a substrate, while the NOₓ trapping product is deposited in the form of a single layer or in the form of a multiple layer onto this same substrate, or is combined with the second reduction and/or three-way catalyst composition, and then deposited onto said substrate.

15. Composition according to one of Claims 1 to 14, **characterised in that** the second reduction and/or three-way catalyst composition and the NOₓ trapping product form a sandwich-type combination, wherein they are deposited on separate supports and these supports are assembled by superposition.

16. Method for purifying the exhaust gases of an internal combustion engine through a composition according to one of the preceding claims, **characterised in that** it comprises the following steps:
• implementation of the combustion of a fuel in the presence of excess oxygen;
• absorption of the NOₓ present in the exhaust gases onto the first composition during combustion in the presence of excess oxygen; then
• generation of an atmosphere with low oxygen content in the exhaust gases;
• release of the NOₓ from the first composition into the atmosphere with low oxygen content;
• treatment of the NOₓ by the second reduction and/or three-way catalyst composition in the atmosphere with low oxygen content.

## Patentansprüche

1. Zusammensetzung zur Reinigung der Abgase eines Verbrennungsmotors, der die Verbrennung eines Brennstoffes mit mageren Verhältnissen Luft-Brennstoff durchführen kann, umfassend:
- eine erste Zusammensetzung, welche wenigstens einen Träger, der ein Ceroxid und wenigstens eine aktive Phase, die Mangan enthält, umfaßt,
- eine zweite Zusammensetzung zur Reduktion und/oder einen Dreiwegekatalysator, verschieden von der ersten Zusammensetzung,
**dadurch gekennzeichnet, daß** die aktive Phase darüber hinaus wenigstens ein Alkalielement und/oder eine Erdalkalielement und/oder ein Seltenerdelement enthält, angepaßt für die erste Zusammensetzung, welche das Mangan enthält, und dieses Element die in den Abgasen vorhandenen NOₓ in Anwesenheit eines Sauerstoffüberschusses absorbiert und die NOₓ freisetzt, wenn die Sauer-stoffkonzentration abnimmt.

2. Zusammensetzung gemäß Anspruch 1, **dadurch gekennzeichnet, daß** die zweite Zusammensetzung zur Reduktion und/oder der Dreiwegekatalysator in die Zusammensetzung, welche die NOₓ absorbiert, unter einer gleichen katalytischen Formulierung eingebaut ist.

3. Zusammensetzung gemäß Anspruch 1, **dadurch gekennzeichnet, daß** die zweite Zusammensetzung zur Reduktion und/oder der Dreiwegekatalysator in die Zusammensetzung, welche die NOₓ absorbiert, unter unterschiedlichen katalytischen Formulierungen, die auf ein und demselben Substrat abgelagert sind, eingebaut ist.

4. Zusammensetzung gemäß Anspruch 1, **dadurch gekennzeichnet, daß** das Alkalielement Natrium oder Kalium ist.

5. Zusammensetzung gemäß einem der Ansprüche 1 oder 4, **dadurch gekennzeichnet, daß** das Erdalkalielement Barium oder Strontium ist.

6. Zusammensetzung gemäß einem der Ansprüche 1, 4 oder 5, **dadurch gekennzeichnet, daß** das Seltenerdelement Yttrium oder ein Lanthanid ist.

7. Zusammensetzung gemäß einem der Ansprüche 1 oder 4 bis 6, **dadurch gekennzeichnet, daß** die genannten Elemente, welche in die Zusammensetzung der die NOₓ absorbierenden Mittel eintreten, in Form von Mischung oder festen Lösungen zwischen wenigstens zwei der genannten Elemente vorliegen.

8. Zusammensetzung gemäß einem der Ansprüche 4 bis 7, **dadurch gekennzeichnet, daß** die Anteile dieser Elemente derart sind, daß insgesamt Mn = 2 bis 50 Atom-% und bevorzugt 5 bis 30 Atom-% der Gesamtheit Träger + aktive Phase und K und/oder Seltenerde = 1 - 50 % und bevorzugt 5 bis 30 % der Gesamtheit Träger + aktive Phase.

9. Zusammensetzung gemäß einem der Ansprüche 1 bis 8, **dadurch gekennzeichnet, daß** der Träger außerdem eine der folgenden Verbindungen enthält: - Aluminiumoxid und/oder Zeolithe und/oder Zirkoniumoxid.

10. Zusammensetzung gemäß einem der Ansprüche 1 bis 8, **dadurch gekennzeichnet, daß** der Träger in Form einer Kombination oder einer festen Lösung von wenigstens einem Ceroxid und einer Verbindung, ausgewählt unter Aluminiumoxid, den Zeolithen und den Oxiden von Zirkonium, vorliegt.

11. Zusammensetzung gemäß einem der Ansprüche 9 oder 10, **dadurch gekennzeichnet, daß** der Träger eine Mischung oder eine feste Lösung von CeO₂-ZrO₂ mit Ce/Zr ≥ 1 umfaßt.

12. Zusammensetzung gemäß einem der Ansprüche 10 oder 11, **dadurch gekennzeichnet, daß** der Träger eine Mischung oder eine feste Lösung von CeₓZr_{y}M_{z}O₂ mit 1 ≤ x/y ≤ 19 und 0 ≤ Z ≤ 0,3 und M = Sc, Y oder Seltenerde umfaßt.

13. Zusammensetzung gemäß einem der Ansprüche 1 bis 12, **dadurch gekennzeichnet, daß** die zweite Zusammensetzung zur Reduktion und/oder der Dreiwegekatalysator auf ein und demselben Katalysator umfaßt:
- ein oder mehrere Edelmetalle Pt, Pd, Rh,
- Träger, feuerfeste Oxide, bevorzugt Al₂O₃, dotiert mit oder ohne Erdalkalielementen, bevorzugt Ba, Sr, oder Seltenerdoxide und/oder Oxide vom Typ CeO₂, ZrO₂ oder vorgebildetem Ce-Zr, die bevorzugt durch Oxide von Seltenerden und/oder Yttrium dotiert sein können, und/oder Speicheroxide für Sauerstoff, bevorzugt ZrO₂, CeO₂, oder vorgebildete Oxide von Ce-Zr, die bevorzugt durch Oxide von Seltenerden und/oder Yttrium dotiert sein können, und/oder Rückhalteoxide für H₂S unter den Elementen oder Oxiden von Ni, Mn, Cu.

14. Zusammensetzung gemäß einem der Ansprüche 1 bis 13, **dadurch gekennzeichnet, daß** die zweite Zusammensetzung zur Reduktion und/oder der Dreiwegekatalysator TWC in Form einer Monoschicht oder in einer Multischichtform auf einem Substrat abgelagert sind, während das Fallenprodukt für NOₓ in Form einer Monoschicht oder in Multischichtform auf demselben Substrat abgelagert ist oder mit der zweiten Zusammensetzung zur Reduktion und/oder dem Dreiwegekatalysator, die anschließend auf diesem Substrat abgelagert wurden, gut kombiniert ist.

15. Zusammensetzung gemäß einem der Ansprüche 1 bis 14, **dadurch gekennzeichnet, daß** die zweite Zusammensetzung zu Reduktion und/oder der Dreiwegekatalysator und das Fallenprodukt für NOₓ eine Kombination vom Sandwichtyp durch Ablagerung auf getrennten Trägern und Zusammenbau dieser Träger durch Übereinanderanordnen bilden.

16. Verfahren zur Reinigung der Abgase eines Verbrennungsmotors durch eine Zusammensetzung gemäß einem der vorhergehenden Ansprüche, **dadurch gekennzeichnet, daß** es die folgenden Stufen umfaßt:
- Durchführen der Verbrennung eines Brennstoffes in Anwesenheit eines Sauerstoffüberschusses,
- Absorbieren von in den Abgasen vorliegendem NOₓ auf der ersten Zusammensetzung bei der Verbrennung in Anwesenheit eines Sauerstoffüberschusses,
dann
- Erzeugen einer Umgebung mit schwachem Gehalt an Sauerstoff in dem Abgas,
- Freisetzen der NOₓ von der ersten Zusammensetzung in der Umgebung mit schwachem Gehalt an Sauerstoff,
- Behandeln der NOₓ durch die zweite Zusammensetzung zur Reduktion und oder den Dreiwegekatalysator in der Umgebung mit schwachem Gehalt an Sauerstoff.
